# DEMANDE DE BREVET EUROPEEN

(11) **EP 4 134 354 A1**
(43) Date de publication de la demande: **15.02.2023**
(21) Numéro de dépôt: 22185346.8
(22) Date de dépôt: 11.05.2017
(51) Int. Cl.: C04B 28/08, C04B 28/14, C04B 28/16, C04B 111/00, C04B 111/27, C04B 111/60, C04B 103/14

(54) **LIANT A BASE DE DERIVES D'ALUMINOSILICATE DE CALCIUM POUR MATERIAUX DE CONSTRUCTION**

(30) Priorité: 18.05.2016 FR 1654401
(62) Demande divisionnaire de: 17727653.2
(71) Demandeur: Saint-Gobain Weber, 94370 Sucy-en-Brie (FR)
(72) Inventeur: DUDDA, Udo, 44869 BOCHUM (DE); HESSELBARTH, Frank, 45659 RECKLINGHAUSEN (DE)
(74) Mandataire: Saint-Gobain Recherche

(57) **Abrégé**

La présente invention porte sur un liant hydraulique comprenant au moins 80 % en poids d'un laitier de haut fourneau granulé broyé et au moins un accélérateur de la réaction de durcissement, ledit accélérateur comprenant au moins une source de sulfate de calcium et au moins un agent de nucléation sous forme de particules dont la surface spécifique BET est supérieure à 1m²/g et dont la taille est telle que 50% des particules ont un diamètre moyen inférieur à 5 µm, les dites particules étant choisies parmi les carbonates de calcium, les carbonates de magnésium, les carbonates de calcium et de magnésium, les hydrates de silicate de calcium, les hydrates de silicate d'aluminium, seuls ou en mélange. Ce liant peut être utilisé dans une composition de mortier et béton qui, une fois gâchée avec de l'eau permet d'obtenir des matériaux de construction.

## Description

La présente invention concerne un liant hydraulique à base de dérivés d'aluminosilicate de calcium, en particulier à base de laitiers de haut fourneau, utilisés pour les matériaux de construction, les compositions de mortier ou béton comprenant ledit liant, ainsi que les matériaux de construction obtenus à partir de ces compositions.

La plupart des problèmes environnementaux liés à la production de ciment concerne la fabrication du clinker qui nécessite des opérations de calcination et de chauffage, notamment à des températures très élevées, de l'ordre de 1450°C. La production d'une tonne de ciment Portland génère entre 0,7 et 1 tonne de dioxyde de carbone. De nombreux efforts sont donc réalisés pour réduire l'empreinte carbone du ciment et une des solutions envisagées consiste à utiliser des matières premières ou liants de substitution à base de déchets industriels. Il est possible de réduire la teneur en clinker du ciment, en incorporant des ajouts cimentaires comme les centres volantes éventuellement pouzzolaniques, le laitier de haut fourneau granulé broyé, les fumées de silice ou le métakaolin pour fabriquer des ciments composés, souvent appelés ciments de mélange. De tels ciments sont notamment décrits dans la norme EN197-1 qui définit les spécifications de 27 ciments courants et de leurs constituants.

En raison d'une réactivité importante et de la réduction des émissions de dioxyde de carbone, les ciments comprenant des laitiers et/ou des cendres volantes sont particulièrement intéressants. Le laitier de haut fourneau est un co-produit issu de la fabrication de la fonte à partir de minerai de fer ; il correspond à la gangue stérile du minerai de fer, isolée de la fonte liquide par différence de densité. Le laitier fondu est plus léger et flotte sur le bain d'acier liquide. Un laitier de haut fourneau comprend essentiellement des silicates ou silicoaluminates de chaux. Le laitier vitrifié obtenu par refroidissement brutal du laitier fondu à l'aide de jets d'eau à haute pression a une structure vitreuse. Cela lui permet de développer des propriétés hydrauliques : on parle de laitier granulé dont le diamètre des particules est inférieur à 5 mm. Les laitiers granulés peuvent être finement broyés après séchage et utilisés dans l'industrie cimentaire. La plupart des laitiers de haut fourneau granulés broyés ont une finesse comprise entre 3800 et 4500 cm²/g (également exprimée en unité Blaine).

Les ciments CEMII/A-S, encore appelés ciments Portland au laitier contiennent de 65 à 94% de clinker et de 6 à 35% de laitier de haut fourneau granulé broyé. Les ciments CEMIII/A-B-C, ou ciments de haut fourneau contiennent de 36 à 95% de laitier et de 5 à 64% de clinker. Des travaux effectués récemment ont montré qu'il était possible de remplacer plus de 95% de ciment Portland par du laitier de haut fourneau granulé broyé, voire même d'utiliser ce laitier comme liant pour les matériaux de construction. On citera par exemple le brevet FR-B-2 952 050 qui décrit des liants performants à base de laitier de haut fourneau granulé broyé, utilisables dans des conditions « douces » c'est-à-dire sans nécessiter l'utilisation d'un système activateur fortement basique et par conséquent dangereux à manipuler. La solution proposée consiste à utiliser comme activateur des microparticules de laitier d'une finesse supérieure à 6000 Blaine, en présence d'une très faible quantité de base. Toutefois, avec ce type de système, notamment dans des conditions de basses températures combinées avec une humidité relativement élevée, les temps de prise et de durcissement du liant restent trop faibles en raison d'une vitesse d'hydratation trop lente.

Le brevet US-B1-6,451,105 décrit une composition cimentaire comprenant du ciment Portland éventuellement substitué par des laitiers de haut fourneau et/ou des cendres volantes, dans lesquelles on ajoute un accélérateur de prise à base de calcaire broyé à 150 µm. Le type d'activation proposé dans ce document n'est pas suffisant, lorsque le constituant essentiel du liant est un dérivé d'aluminosilicate de calcium de type laitier et/ou cendres volantes. En effet, les systèmes décrits dans ce brevet contiennent tous au moins 40% de ciment Portland, qui participe donc de façon importante au mécanisme de prise hydraulique des ciments de mélange décrits.

On a donc cherché à développer un système d'activation qui permet d'activer efficacement les laitiers, connus pour être peu réactifs comparativement à d'autres liants hydrauliques.

La présente invention porte sur un liant hydraulique comprenant majoritairement un dérivé d'aluminosilicate de calcium et au moins un accélérateur de la réaction de durcissement du liant qui n'est pas classé dans le groupe des produits irritants ou corrosifs selon la Directive 91/155/CEE et qui garde ses propriétés d'accélérateur, même dans des conditions de basse température. Un autre objet de l'invention concerne une composition de mortier ou de béton comprenant un tel liant. Le liant selon la présente invention permet avantageusement d'obtenir à court terme (début de prise) de bonnes performances mécaniques.

La présente invention a également pour objet des matériaux de construction tels que des adhésifs pour carrelages, des mortiers de jointement, des mortiers de maçonnerie, des chapes, des enduits ou revêtements muraux obtenus à partir des compositions de mortiers ou béton ci-dessus.

Le liant hydraulique selon la présente invention comprend au moins 80% en poids d'un laitier de haut fourneau granulé broyé et au moins un accélérateur de la réaction de durcissement comprenant au moins une source de sulfate de calcium et au moins un agent de nucléation sous forme de particules dont la surface spécifique BET est supérieure à 1m²/g et dont la taille est telle que 50% des particules ont un diamètre moyen inférieur à 5 µm, les dites particules étant choisies parmi les carbonates de calcium, les carbonates de magnésium, les carbonates de calcium et de magnésium, les hydrates de silicate de calcium, les hydrates de silicate d'aluminium, seuls ou en mélange.

Les agents de nucléation permettent avantageusement d'accélérer l'hydratation du liant hydraulique, notamment à température relativement basse, sans nécessiter l'ajout d'autres additifs souvent toxiques. Il est nécessaire qu'au moins 50% des particules d'agents de nucléation ait un diamètre moyen inférieur à 5 µm. Ces agents de nucléation jouent d'autant mieux leur rôle de germes qu'ils sont le plus fin possible et ont une surface spécifique élevée, supérieure à 1 m²/g.

Le liant selon la présente invention peut comprendre des cendres volantes, telles que des cendres volantes silico-alumineuses et des cendres volantes silico-calco-alumineuses, ou des poussières d'argile calcinée ou expansée. La différence entre les cendres volantes de classe F et de classe C réside dans leur teneur respective en calcium. Les cendres volantes de classe F comprennent moins de 8% de calcium et sont moins réactives que les cendres volantes de classe C. La teneur en cendres volantes, poussières d'argile calcinée ou expansée dans le liant selon la présente invention est inférieure ou égale à 15% en poids.

Préférentiellement, le liant selon l'invention comprend entre 85 et 98% en poids de laitier de haut fourneau granulé broyé.

Le liant selon la présente peut comprendre en outre un autre liant hydraulique choisi parmi les ciments Portland, les ciments alumineux, les ciments sulfoalumineux, les ciments bélitiques, les ciments de mélange pouzzolaniques, pris seuls ou en mélange. De façon préférée, la quantité de ce type de liant hydraulique est inférieure ou égale à 15% en poids, voire inférieure ou égale à 10% en poids, voire même préférentiellement inférieure ou égale à 5% en poids.

Le liant selon la présente invention comprend également au moins un accélérateur de la réaction de durcissement. En effet, il est nécessaire, étant donné que les liants à base de dérivés d'aluminosilicate de calcium sont des liants considérés comme peu hydrauliques, d'ajouter un accélérateur qui comprend au moins une source de sulfate de calcium et au moins un agent de nucléation qui favorise l'hydratation du liant en raison de la présence de germes jouant le rôle d'activateur.

La source de sulfate de calcium est choisie parmi le gypse, l'hémihydrate de sulfate de calcium, l'anhydrite et le phosphogypse, seuls ou en mélange, dans une quantité comprise entre 1 et 5% en poids par rapport au poids total de liant. Préférentiellement, la quantité de source de sulfate de calcium est comprise entre 2 et 4% en poids du poids total de liant. La source de sulfate de calcium, dans une telle quantité, permet de contrôler l'activation au début de la réaction et de garantir un piégeage suffisant de l'eau, tout en évitant une formation tardive d'ettringite trop importante qui aurait pour conséquence une fragilisation du matériau après les étapes de prise du liant.

La quantité d'agent de nucléation présent dans le liant hydraulique selon la présente invention représente entre 0,1 et 20% du poids total du liant. L'agent de nucléation est un agent pulvérulent dont la taille des particules est telle que 50% des particules ont un diamètre moyen inférieur à 5 µm. L'activation est particulièrement améliorée lorsque les particules sont de petite taille. En effet, plus les germes sont fins, plus ils sont réactifs. Ils sont choisis parmi les carbonates de calcium, les carbonates de magnésium, les carbonates de calcium et de magnésium, les hydrates de silicate de calcium, les hydrates de silicate d'aluminium, seuls ou en mélange. Ces germes peuvent être obtenus par exemple par précipitation et/ou par broyage.

Les particules d'agent de nucléation sont caractérisées par leur surface spécifique (surface BET exprimée en m²/g) et par le diamètre médian D₅₀ qui correspond à la taille pour laquelle 50% de la population de particules a une taille inférieure à D₅₀.

Avantageusement, l'agent de nucléation est choisi parmi les carbonates de calcium et/ou de magnésium naturels broyés ou précipités dont la surface spécifique BET est supérieure à 4 m²/g. les carbonates de calcium et/ou de magnésium précipités sont préférés.

Il peut aussi être un hydrate de silicate de calcium hydraté dont la surface spécifique BET est supérieure à 2,5 m²/g. L'agent de nucléation peut également être une zéolithe finement broyée. En choisissant un agent de nucléation tel que décrit ci-dessus , il est possible d'obtenir un système d'activation fonctionnant tout à fait convenablement pour les liants considérés comme peu hydrauliques donc peu réactifs.

Lorsque l'agent de nucléation est choisi parmi les hydrates de silicate de calcium, les hydrates de silicate d'aluminium, la quantité d'agent de nucléation est avantageusement, comprise entre 0,2 et 3% en poids par rapport au poids total du liant. Cette quantité est relativement faible par rapport aux systèmes d'activation connus dans l'art antérieur et notamment par rapport à la solution proposée dans la demande de brevet WO 2011/055063 qui prévoit d'ajouter jusqu'à 11% en poids, par rapport au poids total de liant, de microparticules de laitier.

Lorsque l'agent d'activation est de type carbonate, il peut être nécessaire d'en ajouter jusqu'à 20% du poids total du liant pour obtenir une activation satisfaisante. La quantité de carbonates de calcium et/ou de magnésium varie donc entre 0,2 et 20% en poids par rapport au poids du liant total.

L'accélérateur peut également comprendre un ou plusieurs sulfates de métal alcalin, choisi parmi le lithium, le sodium et/ou le potassium, de préférence dans une quantité inférieure ou égale à 0,5% en poids par rapport au poids total du liant. Encore plus préférentiellement, l'accélérateur comprend entre 0,2 et 0,4% en poids par rapport au poids total du liant de sulfates de métal alcalin. Les sulfates permettent avantageusement de favoriser la prise du liant et sont notamment favorables lorsqu'ils sont associés à une source de sulfate de calcium.

L'activateur peut éventuellement comprendre une faible quantité d'un agent régulateur de pH choisi parmi les silicates ou carbonates de métal alcalin, dans une quantité inférieure ou égale à 0,5% en poids par rapport au poids total du liant, et de préférence dans une quantité comprise entre 0,2 et 0,4% du poids total du liant.

L'activateur peut comprendre un additif jouant le rôle d'activateur chimique, notamment choisi parmi le nitrate de calcium, le formiate de calcium ou des liants hydrauliques tels que le ciment Portland ou des ciments alumineux et/ou sulfoalumineux comme mentionné ci-avant. La quantité d'activateur chimique est inférieure ou égale à 5% du poids total du liant, de préférence inférieure ou égale à 4% du poids total du liant. Si l'activateur chimique est un liant hydraulique, il peut être ajouté en plus de la quantité qui peut être introduite en tant que liant hydraulique mentionnée ci-avant.

Le système d'activation selon la présente est un système d'activation douce, à base de produits se présentant sous forme pulvérulente permettant aisément de réaliser des pré-mélanges ou prémix prêts à l'emploi et ne contenant pas de substances irritantes et corrosives.

Le liant hydraulique selon la présente invention peut être hydraté à basses températures (conditions hivernales) ou à températures élevées, suivant les applications recherchées.

La présente invention porte également sur une composition de mortier ou béton comprenant le liant décrit ci-avant en association avec des charges, des fillers, du sable et/ou des granulats. Les charges peuvent être des charges allégeantes de faible densité, minérales ou organiques telles que la perlite expansée, la vermiculite expansée, les billes de verre expansé, les microsphères creuses de verre, les cénosphères, les argiles expansées, les schistes expansés, les pierres ponces, le polystyrène expansé. Les fillers sont classiquement de type siliceux, calcaires et/ou silico-calcaires et présentent une granulométrie comprise allant jusqu'à 150 µm. les granulats ou sables dont la granulométrie varie entre 100 µm et 5 mm permettent de jouer sur l'épaisseur, la dureté, l'aspect final et la perméabilité du mortier.

La composition de mortier ou béton selon la présente invention peut également comprendre en outre un ou plusieurs additifs, choisis parmi des agents rhéologiques, des agents rétenteurs d'eau, des agents entraîneurs d'air, des agents épaississants, des agents de protection biocides, des agents dispersants, des pigments, des accélérateurs et/ou des retardateurs. Les agents rhéologiques peuvent notamment être des plastifiants, par exemple des produits à base d'acides polycarboxyliques tels que des éthers polycarboxyliques, des lignosulphonates, des polynaphtalènes sulphonates, des superplastifiants à base de mélamine, des polyacrylates et/ou des copolymères vinyliques, des éthers de cellulose éventuellement modifiés. Ces additifs lorsqu'ils sont présents représentent chacun moins de 1% du poids total de la composition de mortier.

La présente invention porte également sur des matériaux de construction, en particulier des mortiers-colle ou adhésifs pour carreaux, obtenus par gâchage de la composition de mortier décrite ci-avant avec de l'eau. Les adhésifs ainsi obtenus présentent très avantageusement un durcissement à court terme (c'est-à-dire au bout de 24 heures) très satisfaisant. Les performances en termes de force d'adhésion des adhésifs selon la présente invention répondent aux spécifications permettant d'être classé C2TE-S1 selon la norme EN 12004 : 2007.

Les matériaux de construction peuvent également être des mortiers de jointoiement qui permettent de remplir les interstices existants entre différents éléments de maçonnerie. Ils peuvent être également des chapes, des mortiers de façade tels que des mortiers de ragréage, des sous-enduits, des enduits monocouches, des mortiers de parement organiques et des mortiers d'imperméabilisation.

Les exemples ci-après illustrent l'invention sans en limiter la portée.

### Exemple 1

Une formulation de colle à carrelage comprenant un liant dont le constituant principal est un laitier de haut fourneau granulé broyé avec un système d'accélérateur comprenant des germes de silicate de calcium hydraté selon la présente invention a été préparée en mélangeant les différents constituants donnés dans le tableau 1 ci-dessous.

**Tableau 1**

| **Composant** | **Pourcentage en poids** |
|---|---|
| Sable de silice | 52,5 |
| Laitier (4000 Blaine) | 40,0 |
| Poudre de polymère (copolymère d'acétate de vinyle d'éthylène) | 3,4 |
| CaSO₄ | 1,5 |
| Germes de CSH (surface BET 2.5 m²/g) D₅₀ 2,5 µm | 1,0 |
| Ciment Portland 52.5 | 1,0 |
| Ether de cellulose | 0,4 |
| Sulfate de métal alcalin | 0,1 |
| Carbonate de métal alcalin | 0,1 |

Une préparation pâteuse de consistance crémeuse est obtenue en ajoutant 25% d'eau à cette composition pulvérulente, à une température d'environ 22,1 °C.

Différents tests de résistance à la traction pour déterminer l'adhésion du mortier colle ainsi obtenu ont été réalisés selon la norme EN 1348.

Des pièces de carrelage sont fixées sur un support plan en appliquant une couche du mortier colle obtenu. La résistance à l'arrachement exprimée en N/mm² est mesurée par arrachement après 1 jour, 7 jours et 28 jours de stockage dans les conditions standards, c'est-à-dire à une température de 23°C, avec un taux d'humidité relative de 50%. Une mesure dite « après immersion humide » est également réalisée en mesurant l'arrachement après 7 jours de stockage dans les conditions standards, suivis de 21 jours de stockage en immersion dans l'eau à 23°C. Une mesure d'adhérence dite « après cycle gel-dégel » est effectuée, conformément à la norme EN 12004 : 2007 qui fait elle-même référence à la norme EN1348: 2007. Les échantillons sont soumis à des cycles successifs de gel-dégel. Une mesure dite « après exposition à la chaleur » est effectuée après 14 jours de stockage dans les conditions standards, suivis de 14 jours de stockage à 70° C, puis à nouveau de 1 jour dans les conditions standards.

Un test de force d'adhésion a également été réalisé sur une pièce de carrelage en faïence qui est posée sur un support plan, 20 minutes après l'application d'une couche de mortier colle sur la pièce de carrelage et/ou sur le support plan ; la résistance à l'arrachement est mesurée par arrachement de l'échantillon après 28 jours de stockage dans les conditions standards. Cette mesure est intitulée « après temps ouvert 20 min ».

Les valeurs obtenues pour ces différentes mesures sont comparées aux valeurs minimales requises pour obtenir la certification souhaitée (norme EN 12004).

Des mesures ont également été effectuées pour mesurer la résistance à la déformation du mortier colle utilisé et ont été comparées aux valeurs attendues selon la norme EN 12002. L'ensemble des résultats obtenus sont donnés dans le tableau 2 ci-après.

**Tableau 2**

| **Force d'adhésion (EN 1348)** | mesurée | Attendue (EN 12004) |
|---|---|---|
| 1 jour (N/mm²) | 0,72 | |
| 7 jours (N/mm²) | 1,92 | |
| 28 jours (N/mm²) | 2,35 | 1 |
| Après immersion humide (N/mm²) | 1,98 | 1 |
| Après cycle gel-dégel | 1,60 | 1 |
| Après exposition à la chaleur (N/mm²) | 1,90 | 1 |
| Après temps ouvert 20 min (N/mm²) | 1,2 | 0,5 |

| **Déformation** | | |
|---|---|---|
| Force (N) | 6,52 | |
| Déformation (mm) | 2,98 | 2,5 |

Les valeurs obtenues montrent que les tests satisfont aux critères exigés par la norme.

### Exemple 2

Une formulation de colle à carrelage a été préparée de la même façon que dans l'exemple 1 en remplaçant 5% du laitier par des cendres volantes de classe C. La composition est donnée dans le tableau 3 suivant :

**Tableau 3**

| **Composant** | **Pourcentage en poids** |
|---|---|
| Sable de silice | 52,5 |
| Laitier (4000 Blaine) | 35,0 |
| Cendres volantes | 5,0 |
| Poudre de polymère (copolymère d'acétate de vinyle d'éthylène) | 3,4 |
| CaSO₄ | 1,5 |
| Germes de CSH (surface BET 2.5 m²/g) D₅₀ 2,5 µm | 1,0 |
| Ciment Portland 52.5 | 1,0 |
| Ether de cellulose | 0,4 |
| Sulfate de métal alcalin | 0,1 |
| Carbonate de métal alcalin | 0,1 |

Le tableau 4 ci-dessus donne les performances mécaniques obtenues pour cette colle à carrelage.

**Tableau 4**

| **Force d'adhésion (EN 1348)** | mesurée | Attendue (EN 12004) |
|---|---|---|
| 1 jour (N/mm²) | 0,68 | |
| 7 jours (N/mm²) | 1,82 | |
| 28 jours (N/mm²) | 2,21 | 1 |
| Après immersion humide (N/mm²) | 1,85 | 1 |
| Après cycle gel-dégel | 1,52 | 1 |
| Après exposition à la chaleur (N/mm²) | 1,79 | 1 |
| Après temps ouvert 20 min (N/mm²) | 0,9 | 0,5 |

| **Déformation** | | |
|---|---|---|
| Force (N) | 6,12 | |
| Déformation (mm) | 2,84 | 2,5 |

### Exemple 3

Une formulation de colle à carrelage comprenant un liant dont le constituant principal est un laitier de haut fourneau granulé broyé avec un système d'accélérateur comprenant des particules ultrafines de carbonates de magnésium et de calcium selon la présente invention a été préparée en mélangeant les différents constituants donnés dans le tableau 5 ci-dessous.

**Tableau 5**

| **Composant** | **Pourcentage en poids** |
|---|---|
| Sable de silice | 53,5 |
| Laitier (4000 Blaine) | 35,0 |
| Particules de carbonates de calcium et de magnésium (surface BET de 4 m²/g et D₅₀ de 2,5 µm) | 5,0 |
| Poudre de polymère (copolymère d'acétate de vinyle d'éthylène) | 3,4 |
| CaSO₄ | 1,5 |
| Ciment Portland 52.5 | 1,0 |
| Ether de cellulose | 0,4 |
| Sulfate de métal alcalin | 0,1 |
| Carbonate de métal alcalin | 0,1 |

Des tests d'adhésion sont réalisés comme dans l'exemple 1. Les résultats obtenus sont présentés dans le tableau 6 ci-après :

**Tableau 6**

| **Force d'adhésion (EN 1348)** | mesurée | Attendue (EN 12004) |
|---|---|---|
| 1 jour (N/mm²) | 0,55 | |
| 7 jours (N/mm²) | 1,33 | |
| 28 jours (N/mm²) | 1,76 | 1 |
| Après immersion humide (N/mm²) | 1,24 | 1 |
| Après cycle gel-dégel | 1,18 | 1 |
| Après exposition à la chaleur (N/mm²) | 1,59 | 1 |
| Après temps ouvert 20 min (N/mm²) | 0,7 | 0,5 |

| **Déformation** | | |
|---|---|---|
| Force (N) | 5,8 | |
| Déformation (mm) | 2,62 | 2,5 |

Les valeurs obtenues montrent que les tests satisfont aux critères exigés par la norme.

On note également pour ces trois exemples selon l'invention que les mesures de résistance aux temps courts (c'est-à-dire à 1 jour) sont supérieures à 0,5 N/mm², ce qui est particulièrement intéressant pour les applications recherchées.

## Revendications

1. Liant hydraulique comprenant au moins 80 % en poids d'un laitier de haut fourneau granulé broyé et au moins un accélérateur de la réaction de durcissement **caractérisé en ce que** ledit accélérateur comprend au moins une source de sulfate de calcium et au moins un agent de nucléation sous forme de particules dont la surface spécifique BET est supérieure à 1m²/g et la taille est telle que 50% des particules ont un diamètre moyen inférieur à 5 µm, les dites particules étant choisies parmi les carbonates de calcium, les carbonates de magnésium, les carbonates de calcium et de magnésium, les hydrates de silicate de calcium, les hydrates de silicate d'aluminium, seuls ou en mélange.

2. Liant selon l'une des revendications précédentes **caractérisé en ce qu'**il comprend entre 85 et 98% en poids d'un laitier de haut fourneau granulé broyé.

3. Liant selon l'une des revendications précédentes **caractérisé en ce qu'**il comprend en outre des cendres volantes, telles que des cendres volantes silico-alumineuses et des cendres volantes silico-calco-alumineuses, ou par de poussières d'argile calcinée ou expansée.

4. Liant selon l'une des revendications précédentes **caractérisé en ce qu'**il comprend en outre un autre liant hydraulique choisi parmi les ciments Portland, les ciments alumineux, les ciments sulfoalumineux, les ciments bélitiques, les ciments de mélange pouzzolaniques, pris seuls ou en mélange.

5. Liant selon l'une des revendications précédentes **caractérisé en ce que** la quantité d'agent de nucléation représente entre 0,1 et 20% du poids total du liant.

6. Liant selon l'une des revendications précédentes **caractérisé en ce que** l'accélérateur comprend en outre un agent régulateur de pH choisi parmi les silicates ou les carbonates de métal alcalin, en une quantité inférieure ou égale à 0,5% du poids total de liant, de préférence de 0,2 à 0,4 % du poids du liant.

7. Liant hydraulique selon l'une des revendications précédentes **caractérisé en ce que** l'accélérateur comprend en outre un sulfate de métal alcalin, choisi parmi le lithium, le sodium et/ou le potassium dans une quantité inférieure ou égale à 0,5% du poids total, de préférence entre 0,2 et 0,4% du poids total.

8. Liant selon l'une des revendications précédentes **caractérisé en ce que** l'accélérateur comprend en outre un activateur chimique choisi par le nitrate de calcium, le formiate de calcium, le ciment Portland, le ciment de sulfoaluminate de calcium, le ciment d'aluminate de calcium, seuls ou en mélange, en une quantité inférieure ou égale à 5% du poids total.

9. Liant hydraulique selon l'une des revendications précédentes **caractérisé en ce que** la source de sulfate de calcium comprend un ou plusieurs des éléments choisis parmi le gypse, l'hémihydrate du sulfate de calcium, l'anhydrite et de phosphogypse, dans une quantité comprise entre 1 et 5% du poids total, de préférence entre 2 et 4% du poids total.

10. Liant selon l'une des revendications précédentes **caractérisé en ce que** l'agent de nucléation est choisi parmi les carbonates de calcium et/ou de magnésium naturels broyés ou précipités dont la surface spécifique BET est supérieure ou égale à 4 m²/g, de préférence dans une quantité comprise entre 0,2 et 20% en poids par rapport au poids du liant total.

11. Liant selon la revendication précédente **caractérisé en ce que** l'agent de nucléation est un carbonate de calcium et/ou de magnésium précipité.

12. Liant selon l'une des revendications 1 à 9 **caractérisé en ce que** l'agent de nucléation est une zéolithe.

13. Liant selon l'une des revendications 1 à 9 **caractérisé en ce que** l'agent de nucléation est un hydrate de silicate de calcium hydraté dont la surface spécifique BET est supérieure ou égale à 2,5 m²/g, de préférence dans une quantité comprise entre 0,2 et 3% en poids par rapport au poids du liant total.

14. Composition de béton ou mortier **caractérisée en ce qu'**elle comprend au moins un liant selon l'une des revendications précédentes, des charges éventuellement allégeantes, du sable, des granulats, fillers.

15. Composition selon la revendication 14 **caractérisée en ce qu'**elle comprend en outre un ou plusieurs additifs, choisi parmi des agents rhéologiques, des agents rétenteurs d'eau, des agents entraîneurs d'air, des agents épaississants, des agents de protection biocides, des agents dispersants, des pigments, des accélérateurs et/ou des retardateurs.

16. Matériaux de construction tels que des adhésifs pour carrelages, des mortiers de jointement, des mortiers de maçonnerie, des chapes, des mortiers de ragréage, des sous-enduits, des enduits monocouches, des mortiers de parement organiques, des mortiers d'imperméabilisation, obtenus par gâchage avec de l'eau de la composition de mortier ou béton selon l'une des revendications 14 ou 15.
